# EUROPÄISCHE PATENTANMELDUNG

(11) **EP 1 541 021 A2**
(43) Veröffentlichungstag der Anmeldung: **15.06.2005**
(21) Anmeldenummer: 05005676.1
(22) Anmeldetag: 26.09.2000
(51) Int. Cl.: A01M 7/00, A01C 15/00, A01C 23/00

(54) **Landwirtschaftliche Verteilmaschine**

(30) Priorität: 07.10.1999 DE 19948407; 04.11.1999 DE 19953076
(62) Teilanmeldung aus: 00120879.2
(71) Anmelder: Amazonen-Werke H. Dreyer GmbH & Co. KG, 49205 Hasbergen (DE)
(72) Erfinder: Kirsten, Eckhardt, 04205 Leipzig (DE); Marquering, Johannes, Dr., 49176 Borgloh (DE); Scheufler, Bernd, Dr., 49205 Hasbergen (DE); Oberheide, Friedrich, 49143 Bissendorf (DE)

(57) **Zusammenfassung**

Landwirtschaftliche Verteilmaschine, wie beispielsweise Feldspritze, Großflächendüngerstreuer, etc. mit einem Laufräder (7,7') aufweisenden Fahrwerk, einem Rahmen, auf dem Aufbauelemente, wie beispielsweise zumindest ein Vorratstank und eine Verteileinrichtung angeordnet ist, wobei jedes Laufrad (7,7') mit einer Schwinge (6) über ein Gelenk (5) am Rahmen (1) in aufrechter Ebene bewegbar angelenkt ist, wobei jeweils zwischen der Schwinge (6) und dem Rahmen (1) eine Feder- und/oder Stelleinrichtung (8) angeordnet ist, wobei die Laufräder (7,7') jeweils mittels eines ein aufrechtes Gelenk (12) aufweisenden Achsschenkels (10) an der Schwinge (6) angelenkt sind, wobei jeweils zwischen dem Achsschenkel (10) und der Schwinge (6) ein Stellelement (13) angeordnet ist. Die Stellelemente (8) sind bei Kurvenfahrt derart ansteuer- und betätigbar, daß der Schwerpunkt der Maschine zum Kurveninneren verlagerbar ist.

## Beschreibung

Die Erfindung betrifft eine landwirtschaftliche Verteilmaschine, wie beispielsweise Feldspritze, Großflächendüngerstreuer, etc. mit einem Laufräder aufweisenden Fahrwerk, einem Rahmen, auf dem Aufbauelemente, wie beispielsweise zumindest ein Vorratstank und eine Verteileinrichtung angeordnet ist.

Derartige Verteilmaschinen werden in der Landwirtschaft in vielfältiger Weise eingesetzt. Die Landwirtschaft stellt die Forderungen, dass derartige Verteilmaschinen einen spurgetreuen Nachlauf sowohl bei Kurvenfahrt wie bei Fahrt quer zum Hang sowie eine ausreichende Kippsicherheit bei Querfahrt am Hang aufweisen.

Der Erfindung liegt die Aufgabe zugrunde, hier auf einfache Weise Abhilfe zu schaffen.

Diese Aufgabe wird erfindungsgemäß durch die Merkmale des Patentanspruches 1 gelöst. Infolge dieser Maßnahmen können die Laufräder über die Achsschenkellenkung sowie über die Einstellung der Schwingen für die jeweils erforderlichen Verhältnisse eingestellt und nachgeregelt werden.

Um in einfacher Weise mittels einer elektronischen Regeleinrichtung die Schwingen entsprechend einstellen zu können, damit bei einer Querfahrt am Hang eine Horizontaleinstellung des Rahmens der Verteilmaschine möglich ist, ist vorgesehen, dass jeder Schwinge ein die Schwingenstellung erfassender Sensor zugeordnet ist.

Damit ein Geradeauslauf bzw. ein spurgetreuer Nachlauf der Laufräder der Verteilmaschine in der Schlepperspur von der elektronischen Regeleinrichtung einstellbar ist, ist vorgesehen, dass jedem Achsschenkel ein die Achsschenkelstellung erfassender Sensor zugeordnet ist.

Um eine automatische Einstellung der Schwinge und des Achsschenkels zu erreichen, ist vorgesehen, dass eine elektronische Regeleinrichtung vorhanden ist, welche mittels Signalübertragungseinrichtungen mit den Sensoren verbunden ist, dass die Sensoren Impulse an die elektronische Regeleinrichtung übermitteln, und dass mittels der elektronischen Regeleinrichtung die Feder- und/oder Stelleinrichtung und die Stellelemente des Achsschenkels ansteuerbar sind.

Eine vorteilhafte Ansteuerung der Stellelemente für die Achsschenkel wird dadurch erreicht, dass über die Regeleinrichtung die Stellelemente derart ansteuerbar sind, dass bei Querfahrt am Hang ein spurgetreuer Nachlauf gewährleistet ist und bei Kurvenfahrt ebenfalls ein spurgetreuer Nachlauf der Laufräder in der Spur der Schlepperräder sichergestellt ist.

Damit bei Geradeausfahrt ebenfalls ein spurgetreuer Nachlauf der Feldspritze möglich ist, ist vorgesehen, dass mittels der elektronischen Regeleinrichtung die Laufräder derart einstellbar sind, dass eine Geradeausfahrt gewährleistet ist.

Um die elektronische Regeleinrichtung für verschiedene Verteilmaschinen allgemein einsetzbar auszubilden, ist vorgesehen, dass die elektronische Regeleinrichtung derart ausgelegt ist, dass die Lenkgeometrie in elektronischer Weise berücksichtigt wird, so dass die Laufräder über die Stellelemente entsprechend verstellt werden.

Eine automatische Lageeinstellung und optimaler Nachlauf der Verteilmaschine wird dadurch erreicht, dass eine Lageerfassungseinrichtung zur Erfassung der Neigungslage der Feldspritze vorgesehen ist, dass eine Einrichtung zur Erfassung der Horizontalen, beispielsweise eine "elektronische Wasserwaage" vorgesehen ist, dass über die elektronische Regeleinrichtung die Feder- oder Stelleinrichtung derart ansteuerbar ist, dass bei einer Fahrt quer zum Hang eine zumindest annähernde Horizontallage des Rahmens der Feldspritze durch entsprechende Einstellung der Schwingen über die Feder- und/oder Stelleinrichtung einstellbar ist.

Um eine ausreichende Federung der Verteilmaschine im Einsatz in jedem Falle zu gewährleisten, ist vorgesehen, dass die elektronische Steuer- und Regeleinrichtung derart ausgelegt ist, dass der Federweg der Feder- und Stelleinrichtung begrenzbar ist, so dass zumindest eine einstellbare Mindestfederung vorhanden bleibt.

Damit während des gesamten Ausbringvorganges der Verteilmaschine eine optimale Federung der Verteilmaschine gewährleistet ist, ist vorgesehen, dass die elektronische Regeleinrichtung derart ausgelegt wird, dass der Federweg der Feder- und/oder Stelleinrichtung in Abhängigkeit des Füllstandes und/oder der Neigung des Hanges und/oder der Neigung des Rahmens der Verteilmaschine einstellbar ist.

Hierbei kann vorteilhaft sein, dass die elektronische Steuer- und/oder Regeleinrichtung derart ausgebildet ist, dass der Federweg bzw. die Federkennlinie der Feder- und/oder Stelleinrichtung in Abhängigkeit der Fahrgeschwindigkeit einstellbar ist.

Des Weiteren ist über eine optimale Fahrt quer am Hang vorgesehen, dass die Regeleinrichtung derart ausgebildet ist, dass in Abhängigkeit der von den Sensoren, die der Schwinge zugeordnet sind, die Neigung der Verteilmaschine quer zum Hang überwacht und entsprechend vorgegebener Grenzwerte nachgestellt wird.

Um der Gefahr entgegenzuwirken, dass die Verteilmaschine durch das Hin- und Herschwappen der Flüssigkeit innerhalb des Vorratstanks zum Kippen gebracht wird, ist vorgesehen, dass zumindest ein Sensor zur Erfassung der Hin- und Her- "Schwappbewegung" der Flüssigkeit in den Vorratstank vorgesehen ist, dass der Sensor mit einer elektronischen Regeleinrichtung verbunden ist, mittels welcher aufgrund der ermittelten Daten die Stellelemente derart ansteuerbar sind, so dass durch Bewegung der Verteilmaschine der Schwappbewegung der Flüssigkeit entgegenwirkbar ist.

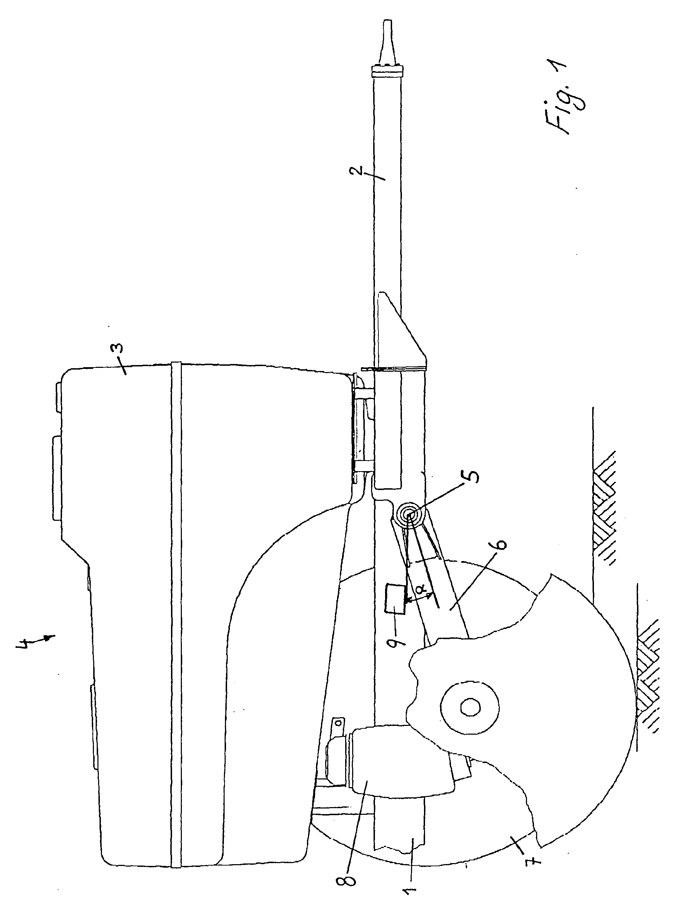

Weitere Einzelheiten der Erfindung sind der Beispielsbeschreibung und den Zeichnungen zu entnehmen. Hierbei zeigen
- Fig. 1: die als Feldspritze ausgebildete Verteilmaschine in Seitenansicht und in Prinzipdarstellung,

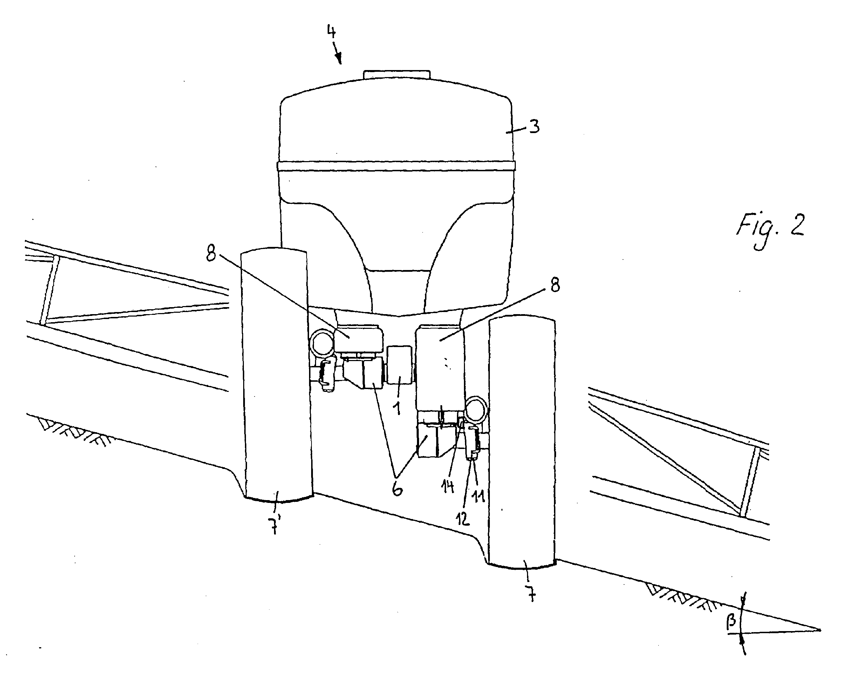

- Fig. 2: die als Feldspritze ausgebildete Verteilmaschine in der Ansicht von hinten und in Prinzipdarstellung,

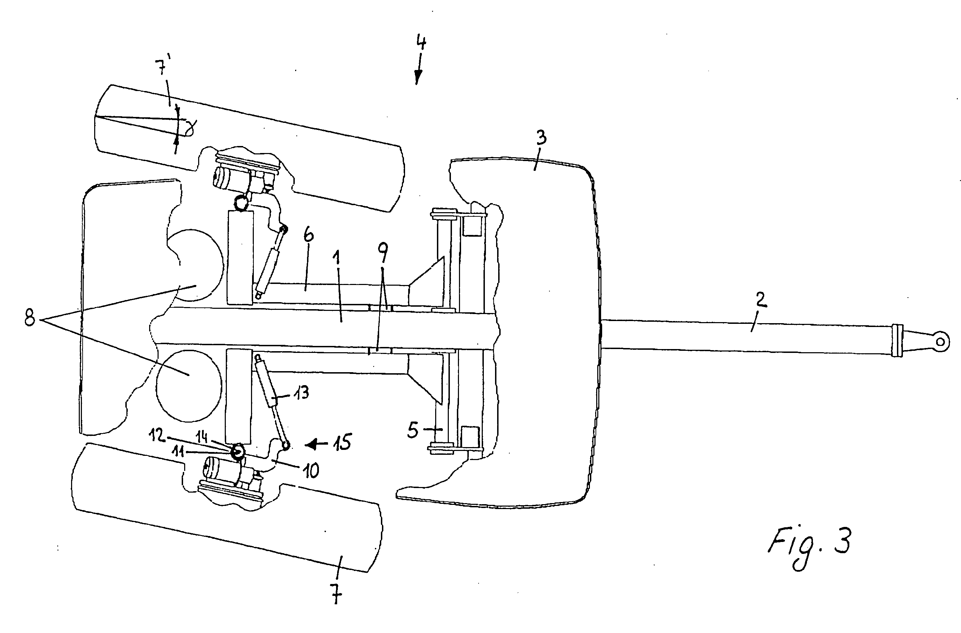

- Fig. 3: die Feldspritze in der Draufsicht und in Prinzipdarstellung,

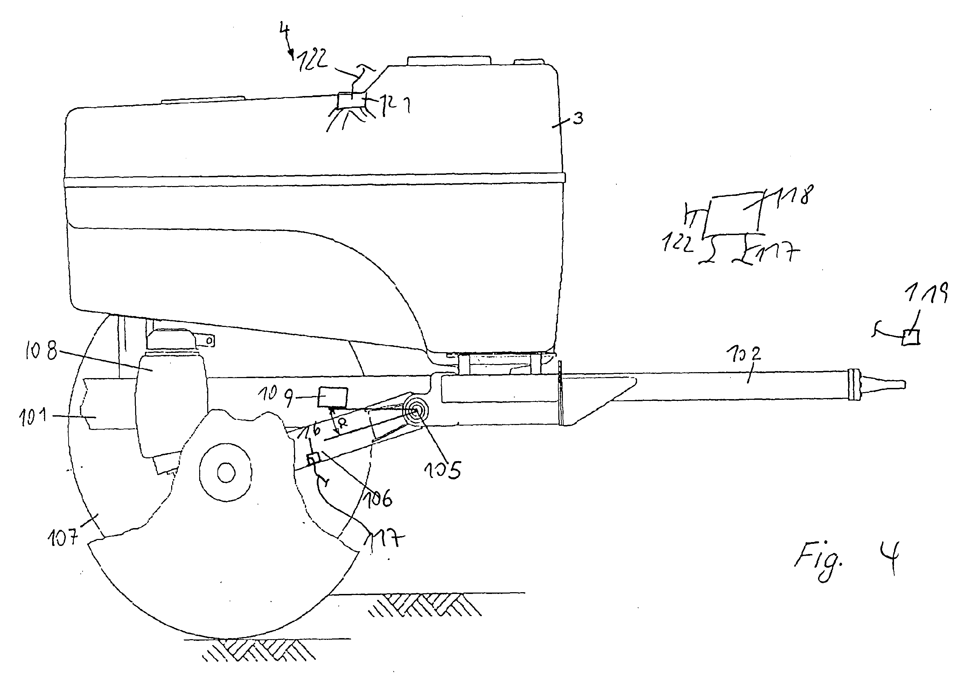

- Fig. 4: die als Feldspritze ausgebildete Verteilmaschine in Seitenansicht und in Prinzipdarstellung,

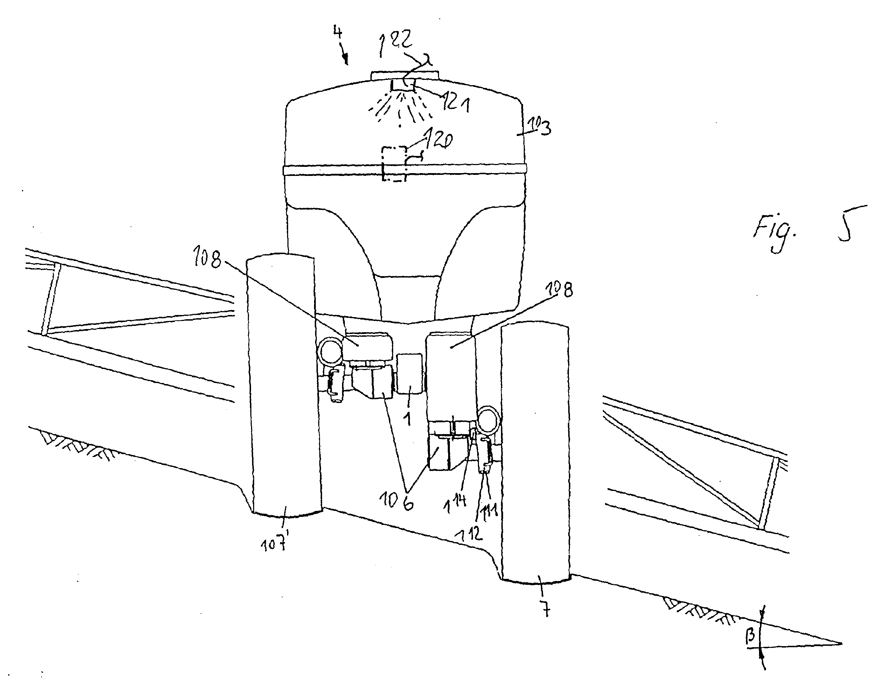

- Fig. 5: die als Feldspritze ausgebildete Verteilmaschine in der Ansicht von hinten und in Prinzipdarstellung und

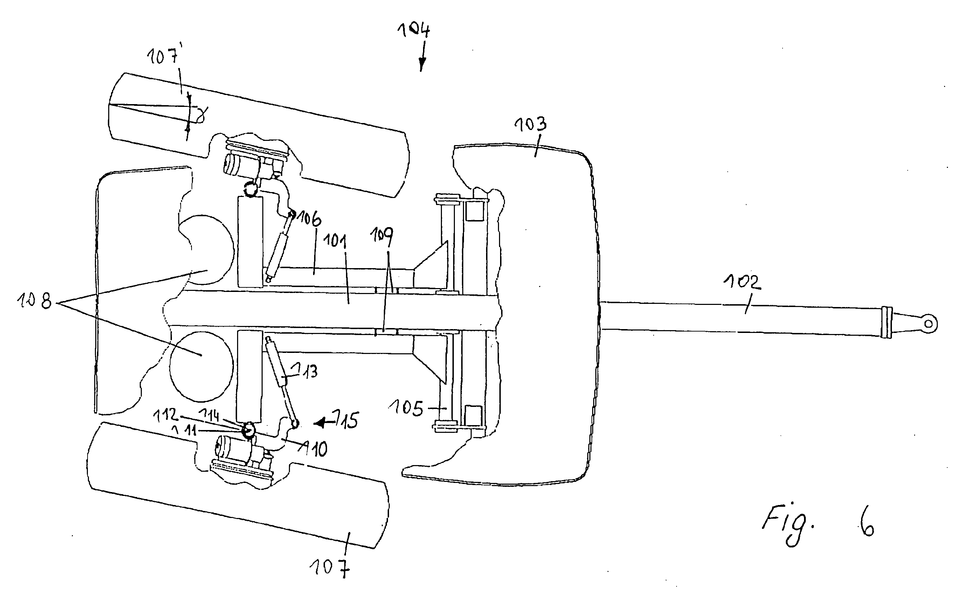

- Fig. 6: die Feldspritze in der Draufsicht und in Prinzipdarstellung.

Die Feldspritze weist den Rahmen 1 auf, an dessen Vorderseite die Zugdeichsel 2 zur Ankupplung an eine Zugeinrichtung eines Ackerschleppers angeordnet ist. Auf dem Rahmen 1 ist der Vorratstank 3 angeordnet. Desweiteren ist im hinteren Bereich eine nicht dargestellte Verteileinrichtung, beispielsweise ein Verteilergestänge angeordnet. An dem Rahmen 1 der Verteilmaschine 4 ist auf jeder Seite mittels eines Gelenkes 5 eine Schwinge 6 in aufrechter Ebene bewegbar angelenkt. Am hinteren Ende der Schwinge 6 ist ein Laufrad 7 und 7' jeweils drehbar gelagert. Zwischen jeder Schwinge 6 und dem Rahmen 1 ist ein Luftfederelement 8, welches als Feder- und Stelleinrichtung ausgebildet ist, angeordnet. Jeder Schwinge 6 ist ein Sensor 9 zugeordnet, mittels welche die Schwingenstellung bzw. der Winkel α der Schwingen 6 zur Horizontalen bzw. zum Rahmen 1 ermittelbar ist.

Die Laufräder 7 und 7' sind mittels eines Achsenschenkels 10 über ein eine aufrechte Drehachse 11 aufweisendes Gelenk 12 an der Schwinge 6 befestigt. Zwischen der Schwinge 6 und dem Achsschenkel 10 ist ein als Hydraulikzylinder 13 ausgebildetes Stellelement angeordnet. Jedem Achsschenkel 10 ist ein Sensor 14 zugeordnet, mit welchem die Achsschenkelstellung zu dem Rahmen 1 bzw. zu der Schwinge 6 erfaßbar ist.

Die Sensoren sind mittels Signalübertragungseinrichtungen, beispielsweise Leitungen mit einer elektronischen Steuer- und Regeleinrichtung verbunden. Die Sensoren übermitteln Impulse an die elektronische Regeleinrichtung, so dass die elektronische Regeleinrichtung auswerten kann, in welcher Stellung sich die Achsschenkel und die Schwingen 6 zueinander befinden. Die elektronische Regeleinrichtung erfaßt einerseits über die Sensoren die Lage der Achsschenkel 10 und der Schwingen 6 und andererseits steuert die elektronische Regeleinrichtung über die Feder- und Stelleinrichtung 8 die Stellung der Schwingen 6 bzw. die Höhenlage der Laufräder 7 und 7' zum Rahmen 1 der Verteilmaschine 4 sowie die Stellung der Achsschenkel 10 und somit der Laufräder 7 und 7'.

Hierbei sind die Stellelemente 13 für die Achsschenkel 10 derart ansteuerbar, dass am Hang ein spurgetreuer Nachlauf gewährleistet ist und bei Kurvenfahrt ebenfalls ein spurgetreuer Nachlauf der Laufräder 7 und 7' in der Spur der Schlepperräder sichergestellt ist. Hierbei ist die Regeleinrichtung derart ausgelegt, dass sie entsprechend der übermittelten Signale die jeweilige Lage der Verteilmaschine 4 zum Ackerschlepper erfaßt, so dass die Laufräder 7 und 7' in der Spur der Schlepperräder folgen. Bei Geradeausfahrt steuert die elektronische Regeleinrichtung die Laufräder 7 und 7' durch Ansteuerung der Stellelemente 13 derart, dass eine Geradeausfahrt gewährleistet ist. Wenn eine Kurve durchfahren wird, werden die Laufräder 7 und 7' über die Stellelemente 13 derart angestellt, dass sie der Schlepperspur folgen. Hierbei ist die elektronische Regeleinrichtung derart ausgelegt, dass die Lenkgeometrie in elektronischer Weise berücksichtigt wird, so dass die Laufräder 7 und 7' über die Stellelemente 13 entsprechend verstellt werden. Hierbei wird das kurveninnere Rad stärker eingeschlagen als das kurvenäußere Rad.

Des Weiteren ist für die Verteilmaschine 4 eine Lageerfassungseinrichtung zur Erfassung der Neigung γ und Lage vorgesehen. Desweiteren ist der elektronischen Regeleinrichtung eine Einrichtung zur Erfassung der Horizontalen, beispielsweise eine "elektronische Wasserwaage" zugeordnet. Hierbei ist die elektronische Regeleinrichtung derart eingerichtet, dass die Feder- und Stelleinrichtung 8, die die Lage der Schwingen 6 zum Rahmen 1 einstellen, angesteuert werden, dass bei einer Fahrt quer zum Hang eine zumindest annähernde Horizontallage des Rahmens 1 der Verteilmaschine 4 durch entsprechende Einstellung der Schwingen 6 über die Feder- und/oder Stelleinrichtung 8 einstellbar ist. Hierbei werden die Stelleinrichtungen 8, die jeder Schwinge 6 zugeordnet sind, entsprechend angesteuert, so ist beispielsweise denkbar, dass die Schwinge 6, die dem auf der hangabwärtigen Seite laufenden Laufrad 7 zugeordnet ist, gegenüber dem Rahmen 1 nach unten gedrückt wird, während die Schwinge 6, die dem hangaufwärtigen Laufrad 7' zugeordnet wird, nach oben gezogen wird.

Hierbei ist die elektronische Steuer- und Regeleinrichtung derart ausgelegt, dass der Federweg der als Luftfederelemente ausgebildeten Feder- und Stelleinrichtung 8 begrenzbar ist, so dass eine zumindest eingestellte Mindestfederung erhalten bleibt, damit eine ausreichende Abfederung der Verteilmaschine 4 während des Ausbringvorganges sichergestellt ist.

Des Weiteren kann die elektronische Regeleinrichtung berücksichtigen, dass der Federweg der Feder- und/oder Stelleinrichtung 8 in Abhängigkeit des Füllstandes und/oder der Neigung β des Hanges und/oder der Neigung des Rahmens 1 der Verteilmaschine 4 einstellbar ist.

Auch kann die elektronische Steuer- und Regeleinrichtung derart ausgebildet sein, dass der Federweg bzw. die Federkennlinie der Feder- und/oder Stelleinrichtung 8 in Abhängigkeit der Fahrgeschwindigkeit einstellbar ist, so dass für die jeweilige Fahrgeschwindigkeit ein optimales Federverhalten gewährleistet bleibt.

Des Weiteren kann die Regeleinrichtung derart ausgelegt sein, dass in Abhängigkeit der von den Sensoren 9, die der Schwinge 6 zugeordnet sind, die Neigung der Verteilmaschine 4 quer zum Hang überwacht und entsprechend vorgegebener Grenzwerte nachgestellt wird.

Auch kann die Regeleinrichtung derart ausgebildet sein, dass in Abhängigkeit der Stellung der Räder 7 und 7' eine Nulllage für die Geradeausfahrt gelernt werden kann.

Des Weiteren kann die Regeleinrichtung derart ausgebildet sein, dass in Abhängigkeit des verwendeten Schleppers eine unterschiedliche Arbeitshöhe an der Verteilmaschine 4 eingestellt werden kann.

Die beiden Regel- und Steuerkreise für die Ansteuerung der Stellelemente 8, die der Schwinge 6 zugeordnet sind und der Stellelemente 13, die der Achsschenkellenkung 15 zugeordnet sind, können getrennt und auch gleichzeitig wirksam sein.

Die Feldspritze weist den Rahmen 101 auf, an dessen Vorderseite die Zugdeichsel 102 zur Ankupplung an eine Zugeinrichtung eines Ackerschleppers angeordnet ist. Auf dem Rahmen 101 ist der Vorratstank 103 angeordnet. Desweiteren ist im hinteren Bereich eine nicht dargestellte Verteileinrichtung, beispielsweise ein Verteilergestänge angeordnet. An dem Rahmen 101 der Verteilmaschine 104 ist auf jeder Seite mittels eines Gelenkes 105 eine Schwinge 106 in aufrechter Ebene bewegbar angelenkt. Am hinteren Ende der Schwinge 106 ist ein Laufrad 107 und 107' jeweils drehbar gelagert. Zwischen jeder Schwinge 6 und dem Rahmen 1 ist ein Luftfederelement 108, welches als Feder- und Stelleinrichtung ausgebildet ist, angeordnet. Jeder Schwinge 106 ist ein Sensor 109 zugeordnet, mittels welche die Schwingenstellung bzw. der Winkel α der Schwingen 106 zur Horizontalen bzw. zum Rahmen 101 ermittelbar ist.

Die Laufräder 107 und 107' sind mittels eines Achsenschenkels 110 über ein eine aufrechte Drehachse 111 aufweisendes Gelenk 112 an der Schwinge 106 befestigt. Zwischen der Schwinge 106 und dem Achsschenkel 110 ist ein als Hydraulikzylinder 113 ausgebildetes Stellelement angeordnet. Jedem Achsschenkel 110 ist ein Sensor 114 zugeordnet, mit welchem die Achsschenkelstellung zu dem Rahmen 101 bzw. zu der Schwinge 106 erfaßbar ist.

Die Sensoren sind mittels Signalübertragungseinrichtungen, beispielsweise Leitungen mit einer elektronischen Steuer- und Regeleinrichtung verbunden. Die Sensoren übermitteln Impulse an die elektronische Regeleinrichtung, so dass die elektronische Regeleinrichtung auswerten kann, in welcher Stellung sich die Achsschenkel und die Schwingen 106 zueinander befinden. Die elektronische Regeleinrichtung erfaßt einerseits über die Sensoren die Lage der Achsschenkel 110 und der Schwingen 106 und andererseits steuert die elektronische Regeleinrichtung über die Feder- und Stelleinrichtung 108 die Stellung der Schwingen 106 bzw. die Höhenlage der Laufräder 107 und 107' zum Rahmen 101 der Verteilmaschine 104 sowie die Stellung der Achsschenkel 110 und somit der Laufräder 107 und 107'.

Hierbei sind die Stellelemente 113 für die Achsschenkel 110 derart ansteuerbar, dass am Hang ein spurgetreuer Nachlauf gewährleistet ist und bei Kurvenfahrt ebenfalls ein spurgetreuer Nachlauf der Laufräder 107 und 107' in der Spur der Schlepperräder sichergestellt ist. Hierbei ist die Regeleinrichtung derart ausgelegt, dass sie entsprechend der übermittelten Signale die jeweilige Lage der Verteilmaschine 104 zum Ackerschlepper erfaßt, so dass die Laufräder 107 und 107' in der Spur der Schlepperräder folgen. Bei Geradeausfahrt steuert die elektronische Regeleinrichtung die Laufräder 107 und 107' durch Ansteuerung der Stellelemente 113 derart, dass eine Geradeausfahrt gewährleistet ist. Wenn eine Kurve durchfahren wird, werden die Laufräder 107 und 107' über die Stellelemente 113 derart angestellt, dass sie der Schlepperspur folgen. Hierbei ist die elektronische Regeleinrichtung derart ausgelegt, dass die Lenkgeometrie in elektronischer Weise berücksichtigt wird, so dass die Laufräder 107 und 107' über die Stellelemente 113 entsprechend verstellt werden. Hierbei wird das kurveninnere Rad stärker eingeschlagen als das kurvenäußere Rad.

Des Weiteren ist für die Verteilmaschine 104 eine Lageerfassungseinrichtung zur Erfassung der Neigung γ und Lage vorgesehen. Desweiteren ist der elektronischen Regeleinrichtung eine Einrichtung zur Erfassung der Horizontalen, beispielsweise eine "elektronische Wasserwaage" zugeordnet. Hierbei ist die elektronische Regeleinrichtung derart eingerichtet, dass die Feder- und Stelleinrichtung 108, die die Lage der Schwingen 106 zum Rahmen 101 einstellen, angesteuert werden, dass bei einer Fahrt quer zum Hang eine zumindest annähernde Horizontallage des Rahmens 101 der Verteilmaschine 104 durch entsprechende Einstellung der Schwingen 106 über die Feder- und/oder Stelleinrichtung 108 einstellbar ist. Hierbei werden die Stelleinrichtungen 108, die jeder Schwinge 106 zugeordnet sind, entsprechend angesteuert, so ist beispielsweise denkbar, dass die Schwinge 106, die dem auf der hangabwärtigen Seite laufenden Laufrad 107 zugeordnet ist, gegenüber dem Rahmen 101 nach unten gedrückt wird, während die Schwinge 106, die dem hangaufwärtigen Laufrad 107' zugeordnet wird, nach oben gezogen wird.

Hierbei ist die elektronische Steuer- und Regeleinrichtung derart ausgelegt, dass der Federweg der als Luftfederelemente ausgebildeten Feder- und Stelleinrichtung 108 begrenzbar ist, so dass eine zumindest eingestellte Mindestfederung erhalten bleibt, damit eine ausreichende Abfederung der Verteilmaschine 104 während des Ausbringvorganges sichergestellt ist.

Des Weiteren kann die elektronische Regeleinrichtung berücksichtigen, dass der Federweg der Feder- und/oder Stelleinrichtung 108 in Abhängigkeit des Füllstandes und/oder der Neigung β des Hanges und/oder der Neigung des Rahmens 1 der Verteilmaschine 104 einstellbar ist.

Auch kann die elektronische Steuer- und Regeleinrichtung derart ausgebildet sein, dass der Federweg bzw. die Federkennlinie der Feder- und/oder Stelleinrichtung 108 in Abhängigkeit der Fahrgeschwindigkeit einstellbar ist, so dass für die jeweilige Fahrgeschwindigkeit ein optimales Federverhalten gewährleistet bleibt.

Des Weiteren kann die Regeleinrichtung derart ausgelegt sein, dass in Abhängigkeit der von den Sensoren 109, die der Schwinge 106 zugeordnet sind, die Neigung der Verteilmaschine 104 quer zum Hang überwacht und entsprechend vorgegebener Grenzwerte nachgestellt wird.

Auch kann die Regeleinrichtung derart ausgebildet sein, dass in Abhängigkeit der Stellung der Räder 107 und 107' eine Nulllage für die Geradeausfahrt gelernt werden kann.

Des Weiteren kann die Regeleinrichtung derart ausgebildet sein, dass in Abhängigkeit des verwendeten Schleppers eine unterschiedliche Arbeitshöhe an der Verteilmaschine 104 eingestellt werden kann.

Die beiden Regel- und Steuerkreise für die Ansteuerung der Stellelemente 108, die der Schwinge 106 zugeordnet sind und der Stellelemente 113, die der Achsschenkellenkung 115 zugeordnet sind, können getrennt und auch gleichzeitig wirksam sein.

Im Bereich der Laufräder 107 ist der Sensor 116 zur Ermittlung der Fahrgeschwindigkeit angeordnet. Dieser Sensor 116 ist mit der als Kabel 117 ausgebildeten Signalübertragungseinrichtung mit der elektronischen Regel- und Steuereinrichtung 118 verbunden. Desweiteren ist ein Sensor 119 zur Erfassung des Lenkeinschlages der nicht dargestellten Zugmaschine vorgesehen. Aus den von dem Sensor 119 über den Lenkeinschlag und der von dem Sensor 116 zur Ermittlung der Fahrgeschwindigkeit übermittelten Daten wird mittels der elektronischen Steuer- und Regeleinrichtung 118 die auf die Verteilmaschine bei Kurvenfahrt einwirkende Fliehkraft ermittelt. Aufgrund der ermittelten Fliehkraft, unter Berücksichtigung des Füllungsgrades des Vorratstanks 103, wird so die tatsächlich auf die Maschine einwirkende Fliehkraft ermittelt. Entsprechend der ermittelten und auftretenden Fliehkraft wird die Maschine bei Kurvendurchfahrt entsprechend geneigt, in dem die Stellelemente 108 entsprechend angesteuert werden, so dass das entsprechende Laufrad 107 oder 107' angehoben oder abgesenkt wird, damit die Maschine entsprechend zum Kurveninneren geneigt wird. Somit wird die Kippgefahr erheblich reduziert.

An Stelle des Sensors 116 zur Ermittlung der Fahrgeschwindigkeit und des Sensors 119 zur Ermittlung des Lenkeinschlages kann der mit strichpunktierten Linien vorgesehene Sensor 120 vorgesehen sein, der die auf die Verteilmaschine bei Kurvenfahrt einwirkende Fliehkraft ermittelt. Aufgrund der von diesem Sensor 120 ermittelten Daten über die bei Kurvenfahrt einwirkende Fliehkraft wird die Maschine zum Kurveninneren bei Durchfahren einer Kurve durch Verstellung der Verstellelemente 108 entsprechend geneigt, damit gewährleistet ist, dass die Maschine bei relativ schneller Kurvendurchfahrt nicht umkippt.

Des Weiteren ist im Inneren des Vorratstanks 103 der Sensor 121, der die Hin- und Her-"Schwappbewegung" der Flüssigkeit in dem Vorratstank 103 erfaßt, angeordnet. Dieser Sensor 121 ist ebenfalls mit der elektronischen Regeleinrichtung 118 über das Kabel 122 oder einer anderen Signalübertragungseinrichtung verbunden. Mittels der von dem Sensor 121 an die elektronische Stelleinrichtung übermittelten Daten werden von der elektronischen Stelleinrichtung 118 entsprechend eines abgespeicherten Softwareprogrammes die Stellelemente 108 angesteuert, so dass durch die Bewegung der Verteilmaschine, die durch die Betätigung der Stellelemente 108 hervorgerufen wird, der Schwappbewegung der Flüssigkeit entgegengewirkt wird, so dass eine Stabilisierung der Verteilmaschine trotz des Bestrebens der Flüssigkeit zum Hin- und Herschwappen erreicht wird, weil durch die entsprechende entgegengesetzte bzw. entsprechende Bewegung der Verteilmaschine durch die Ansteuerung der Stellelemente 108 und der dadurch hervorgerufenen Bewegung der Verteilmaschine der Schwappbewegung der Flüssigkeit entgegengewirkt wird. Hierdurch wird ein wesentlich stabilisiertes Fahrverhalten der Feldspritze erreicht.

## Patentansprüche

1. Landwirtschaftliche Verteilmaschine, wie beispielsweise Feldspritze, Großflächendüngerstreuer, etc. mit einem Laufräder aufweisenden Fahrwerk, einem Rahmen, auf dem Aufbauelemente, wie beispielsweise zumindest ein Vorratstank und eine Verteileinrichtung angeordnet ist, wobei jedes Laufrad (7, 7') mit einer Schwinge (6) über ein Gelenk (5) am Rahmen (1) in aufrechter Ebene bewegbar angelenkt ist, wobei jeweils zwischen der Schwinge (6) und dem Rahmen (1) eine Feder- und/oder Stelleinrichtung (8) angeordnet ist, wobei die Laufräder (7, 7') jeweils mittels eines ein aufrechtes Gelenk (12) aufweisenden Achsschenkels (10) an der Schwinge (6) angelenkt sind, wobei jeweils zwischen dem Achsschenkel (10) und der Schwinge (6) ein Stellelement (13) angeordnet ist.

2. Verteilmaschine nach Anspruch 1, **dadurch gekennzeichnet, dass** jeder Schwinge (6) ein die Schwingenstellung erfassender Sensor (9) zugeordnet ist.

3. Verteilmaschine nach Anspruch 1, **dadurch gekennzeichnet, dass** jedem Achsschenkel (10) ein die Achsschenkelstellung erfassender Sensor (14) zugeordnet ist.

4. Verteilmaschine nach einem oder mehreren der vorstehenden Ansprüche, **dadurch gekennzeichnet, dass** eine Regeleinrichtung vorhanden ist, welche mittels Signalübertragungseinrichtungen mit den Sensoren verbunden ist, dass die Sensoren Impulse an die elektronische Regeleinrichtung übermitteln, und dass mittels der elektronischen Regeleinrichtung die Feder- und/oder Stelleinrichtung (8) und die Stellemente (13) des Achsschenkels (10) ansteuerbar sind.

5. Verteilmaschine nach einem oder mehreren der vorstehenden Ansprüche, **dadurch gekennzeichnet, dass** über die Regeleinrichtung die Stellelemente (13) derart ansteuerbar sind, dass am Hang ein spurgetreuer Nachlauf gewährleistet ist und bei Kurvenfahrt ebenfalls ein spurgetreuer Nachlauf der Laufräder (7, 7') in der Spur der Schlepperräder sichergestellt ist.

6. Verteilmaschine nach einem oder mehreren der vorstehenden Ansprüche, **dadurch gekennzeichnet, dass** mittels der elektronischen Regeleinrichtung die Laufräder (7, 7') derart einstellbar sind, dass eine Geradeausfahrt gewährleistet ist.

7. Verteilmaschine nach einem oder mehreren der vorstehenden Ansprüche, **dadurch gekennzeichnet, dass** die elektronische Regeleinrichtung derart ausgelegt ist, dass die Lenkgeometrie in elektronischer Weise berücksichtigt wird, so dass die Laufräder (7, 7') über die Stellelemente (13) entsprechend verstellt werden.

8. Verteilmaschine nach einem oder mehreren der vorstehenden Ansprüche, **dadurch gekennzeichnet, dass** eine Lageerfassungseinrichtung zur Erfassung der Neigung (β) und Lage der Verteilmaschine (4) vorgesehen ist, dass eine Einrichtung zur Erfassung der Horizontalen, beispielsweise eine "elektronische Wasserwaage" vorgesehen ist, dass über die elektronische Regeleinrichtung die Feder- oder Stelleinrichtung (8) derart ansteuerbar ist, dass bei einer Fahrt quer zum Hang eine zumindest annähernde Horizontallage des Rahmens (1) der Verteilmaschine (4) durch entsprechende Einstellung der Schwingen (6) über die Feder- und/oder Stelleinrichtung (8) einstellbar ist.

9. Verteilmaschine nach einem oder mehreren der vorstehenden Ansprüche, **dadurch gekennzeichnet, dass** die elektronische Steuer- und Regeleinrichtung derart ausgelegt ist, dass der Federweg der Feder- und Stelleinrichtung (8) begrenzbar ist, so dass zumindest eine einstellbare Mindestfederung vorhanden bleibt.

10. Verteilmaschine nach einem oder mehreren der vorstehenden Ansprüche, **dadurch gekennzeichnet, dass** die elektronische Regeleinrichtung derart ausgelegt wird, dass der Federweg (α) der Feder- und/oder Stelleinrichtung (8) in Abhängigkeit des Füllstandes und/oder der Neigung (β) des Hanges und/oder der Neigung des Rahmens (1) der Verteilmaschine (4) einstellbar ist.

11. Verteilmaschine nach einem oder mehreren der vorstehenden Ansprüche, **dadurch gekennzeichnet, dass** die elektronische Steuer- und/oder Regeleinrichtung derart ausgebildet ist, dass der Federweg bzw. die Federkennlinie der Feder- und/oder Stelleinrichtung (8) in Abhängigkeit der Fahrgeschwindigkeit einstellbar ist.

12. Verteilmaschine nach einem oder mehreren der vorstehenden Ansprüche, **dadurch gekennzeichnet, dass** die Regeleinrichtung derart ausgebildet ist, dass in Abhängigkeit der von den Sensoren (9), die der Schwinge (6) zugeordnet wird, die Neigung der Verteilmaschine (4) quer zum Hang überwacht und entsprechend vorgegebener Grenzwerte nachgestellt wird.

13. Verteilmaschine nach einem oder mehreren der vorstehenden Ansprüche, **dadurch gekennzeichnet, dass** die Regeleinrichtung derart ausgebildet ist, dass in Abhängigkeit der Stellung der Räder (7, 7') eine Nulllage für die Geradeausfahrt gelernt werden kann.

14. Verteilmaschine nach einem oder mehreren der vorstehenden Ansprüche, **dadurch gekennzeichnet, dass** die Regeleinrichtung derart ausgebildet ist, dass in Abhängigkeit des verwendeten Schleppers eine unterschiedliche Arbeitshöhe an der Verteilmaschine (4) eingestellt werden kann.

15. Verteilmaschine, wie beispielsweise Feldspritze, mit einem Laufräder aufweisenden Fahrwerk, einem Rahmen, auf dem Aufbauelemente, wie beispielsweise zumindest ein Vorratstank und eine Verteileinrichtung angeordnet sind, wobei jedes Laufrad mittels Verstellelemente am Rahmen in aufrechter Ebene bewegbar angelenkt ist, insbesondere nach Anspruch 1, **dadurch gekennzeichnet, dass** zumindest ein Sensor (121) zur Erfassung der Hin- und Her-"Schwappbewegung" der Flüssigkeit in dem Vorratstank (103) vorgesehen ist, dass der Sensor (121) mit einer elektronischen Regeleinrichtung (118) verbunden ist, mittels welcher aufgrund der ermittelten Daten die Stellelemente (108) ansteuerbar sind, so dass durch Bewegung der Verteilmaschine der "Schwappbewegung" der Flüssigkeit entgegenwirkbar ist.
